# EUROPÄISCHE PATENTSCHRIFT

(11) **EP 3 757 341 B1**
(45) Veröffentlichungstag und Bekanntmachung des Hinweises auf die Patenterteilung: **17.01.2024**
(21) Anmeldenummer: 20165300.3
(22) Anmeldetag: 24.03.2020
(51) Int. Cl.: E05F 15/70

(54) **TÜRANTRIEB ZUM AUTOMATISCHEN ANTREIBEN EINER TÜR MIT EINER MIT DEM TÜRANTRIEB VERBUNDENEN BENUTZERSCHNITTSTELLENEINHEIT**
DOOR DRIVE UNIT FOR AUTOMATIC DRIVING OF A DOOR WITH AN USER INTERFACE UNIT MOUNTED ON THE DRIVE UNIT
DISPOSITIF D'ENTRAÎNEMENT AUTOMATIQUE D'UNE PORTE AVEC UNE UNITÉ D'INTERFACE UTILISATEUR MONTÉE AU TEL DISPOSITIF D'ENTRAÎNEMENT

(30) Priorität: 28.06.2019 DE 102019209521
(43) Veröffentlichungstag der Anmeldung: 30.12.2020
(73) Patentinhaber: GEZE GmbH, 71229 Leonberg (DE)
(72) Erfinder: Beer, Hermann, 9427 Wolfhalden (CH); Schluep, Thomas, Novato, CA, 94949 (US); Weber, Christoph, 70176 Stuttgart (DE); Wellnitz, Martin, 71229 Leonberg (DE)

(56) Entgegenhaltungen:
- US-A1- 2015 262 438

## Beschreibung

Die vorliegende Erfindung betrifft eine Benutzerschnittstelleneinheit für einen automatischen Türantrieb, sowie einen automatischen Türantrieb mit einer Benutzerschnittstelleneinheit.

Türantriebe werden zum automatischen Öffnen und Schließen von Türen eingesetzt. Sie umfassen in der Regel einen angetriebenen Hebel, der ein Türblatt der angetriebenen Tür mit einem Türrahmen oder einer anderen feststehenden Struktur der Tür verbindet. Der Türantrieb kann den Hebel beispielsweise elektrisch oder hydraulisch betätigen.

Türantriebe können an den angetriebenen Türen auf verschiedene Arten montiert werden. Bei einer sogenannten Türblattmontage wird der Türantrieb auf dem Türblatt der angetriebenen Tür montiert und über den Hebel mit dem Türrahmen verbunden, während er bei einer sogenannten Kopfmontage an dem Türrahmen montiert und über den Hebel mit dem Türblatt verbunden wird. Des Weiteren können Türantriebe entweder auf der Öffnungsseite der Tür, auch Bandseite genannt, oder auf der Schließseite der Tür, auch Bandgegenseite genannt, montiert werden. Je nach Öffnungsrichtung der Tür können Türantriebe entweder linksöffnend an DIN links angeschlagenen Türen oder rechtsöffnend an DIN rechts angeschlagenen Türen montiert werden.

Grundsätzlich ist es wünschenswert, ein und denselben Türantrieb möglichst für alle Montagearten verwenden zu können. Hierbei ist es jedoch in der Regel notwendig, dass der Türantrieb in mindestens zwei voneinander unterschiedlichen räumlichen Lagen bzw. räumlichen Orientierungen montierbar ist. Dies kann beispielsweise dann notwendig sein, wenn der Türantrieb auf der gleichen Seite der Tür entweder linksöffnend oder rechtsöffnend montierbar sein soll oder wenn er bei gleicher Anschlagrichtung entweder auf der Öffnungsseite oder auf der Schließseite der Tür montierbar sein soll. Üblicherweise sind für mehrere oder alle Montagearten verwendbare Türantriebe zumindest in zueinander um 180° gedrehten Lagen montierbar.

Bei der Inbetriebnahme eines Türantriebs werden für den Betrieb benötigte Parameter eingestellt und in einer Steuereinheit des Türantriebs hinterlegt. Hierfür wird der Türantrieb in der Regel über eine Datenleitung mit einem speziellen Programmiergerät verbunden, welches eine Benutzerschnittstelle aufweist, mit der die benötigten Parameter eingestellt werden können. Das Mitführen und Anschließen eines derartigen Programmiergerätes ist jedoch mit einem gewissen Aufwand verbunden.

In der Druckschrift US 2015/0262438 A1 wird ein Türantrieb beschrieben, in dessen Gehäuse ein Steuergerät mit einem Display und einem als Joystick ausgebildeten Eingabegerät angeordnet ist. Das Steuergerät dient unter anderem dazu, den Türantrieb bei Inbetriebnahme zu konfigurieren. Darüber hinaus ist der beschriebene Türantrieb dazu ausgebildet, sowohl öffnungsseitig als auch schließseitig an einer Tür angeordnet zu werden, wobei der Türantrieb dabei jeweils in 180° zueinander gedrehten Lagen montiert wird. Durch die Drehung des Türantriebs ändert sich auch die räumliche Lage des Steuergeräts, sowie des an dem Steuergerät angeordneten Displays und Joysticks. Dies hat unter anderem zur Folge, dass die Betätigungsrichtungen des Joysticks je nach Lage des Steuergeräts in unterschiedliche Raumrichtungen ausgerichtet sind, was die Bedienbarkeit des Steuergeräts erschwert.

Es ist Aufgabe der Erfindung eine Benutzerschnittstelleneinheit für einen automatischen Türantrieb und einen automatischen Türantrieb derart anzugeben, dass der Türantrieb auf einfache und flexible Weise an einer angetriebenen Tür montiert und parametriert werden kann.

Diese Aufgabe wird durch eine Benutzerschnittstelleneinheit für einen automatischen Türantrieb und einen automatischen Türantrieb gemäß den unabhängigen Ansprüchen gelöst. Weiterbildungen sind jeweils in den abhängigen Ansprüchen angegeben.

Eine Benutzerschnittstelleneinheit für einen automatischen Türantrieb umfasst eine Anzeigeeinheit zur Ausgabe von Ausgabeinformationen und eine Bedienelementeanordnung zum Erfassen von Eingabeinformationen. Die Benutzerschnittstelleneinheit ist zusammen mit dem Türantrieb in einer ersten räumlichen Lage und in einer zweiten räumlichen Lage an einer durch den Türantrieb antreibbaren Tür montierbar. Die Bedienelementeanordnung umfasst ein erstes Bedienelement und ein zweites Bedienelement, wobei das erste Bedienelement in der ersten räumlichen Lage der Benutzerschnittstelleneinheit auf der gleichen Raumseite der Bedienelementeanordnung angeordnet ist wie das zweite Bedienelement in der zweiten räumlichen Lage. Die Anzeigeeinheit ist dazu ausgebildet, die angezeigten Ausgabeinformationen sowohl in der ersten räumlichen Lage als auch in der zweiten räumlichen Lage der Benutzerschnittstelleneinheit in der gleichen räumlichen Orientierung anzuzeigen. Zudem ist die Benutzerschnittstelleneinheit dazu ausgebildet, in der ersten räumlichen Lage mit dem ersten Bedienelement die gleiche Eingabeinformation zu erfassen wie mit dem zweiten Bedienelement in der zweiten räumlichen Lage.

Eine derartige, an dem Türantrieb angeordnete Benutzerschnittstelleneinheit ermöglicht es, den Türantrieb nach der Montage an der angetriebenen Tür auf einfache und komfortable Weise zu konfigurieren. Insbesondere ist es nicht notwendig, ein separates Programmiergerät mitzuführen und anzuschließen. Indem die Anzeigeeinheit dazu ausgebildet ist, die Ausgabeinformationen, unabhängig von der Lage des Türantriebs und der Benutzerschnittstelleneinheit, immer in der gleichen Orientierung anzuzeigen, können die Ausgabeinformationen stets aufrecht und damit gut lesbar dargestellt werden.

Die Bedienbarkeit der Benutzerschnittstelleneinheit wird dadurch weiter erhöht, dass unabhängig von der Lage der Benutzerschnittstelleneinheit das auf einer vorgegebenen Raumseite der Bedienelementeanordnung angeordnete Bedienelement, in der ersten räumlichen Lage das erste Bedienelement und in der zweiten räumlichen Lage das zweite Bedienelement, zum Erfassen der gleichen Eingabeinformation verwendet wird. Damit kann gewährleistet werden, dass eine logische räumliche Anordnung der Bedienelemente in der ersten und in der zweiten räumlichen Lage gleich ist und die unterschiedlichen Eingabeinformationen unabhängig von der räumlichen Lage der Benutzerschnittstelle mittels auf der gleichen Raumseite der Bedienelementeanordnung angeordneter Bedienelemente erfasst wird.

Die über die Bedienelementeanordnung erfassten Eingabeinformationen können beispielsweise richtungsabhängig sein und jeweils auf unterschiedliche Raumrichtungen bezogen sein. Sie können beispielsweise dazu dienen, eine in der Anzeigeeinheit dargestellte Ausgabeinformation wahlweise in eine erste Raumrichtung, etwa nach oben, oder in eine zweite Raumrichtung, etwa nach unten, zu verschieben. Dabei kann ein an einer ersten Raumseite der Bedienelementeanordnung liegendes Bedienelement stets eine Bewegung der Ausgabeinformation in die erste Raumrichtung und ein an einer zweiten Raumseite der Bedienelementeanordnung liegendes Bedienelement stets eine Bewegung der Ausgabeinformation in die zweite Raumrichtung bewirken. Die zweite Raumseite kann beispielsweise der ersten Raumseite gegenüberliegend angeordnet sein.

Die erste Raumseite, an der das eine Verschiebung in die erste Raumrichtung bewirkende Bedienelement liegt, kann beispielsweise eine Oberseite oder eine rechte Seite der Bedienelementeanordnung und die zweite Raumseite, an der das eine Verschiebung in die zweite Raumrichtung bewirkende Bedienelement liegt, kann beispielsweise eine Unterseite oder eine linke Seite der Bedienelementeanordnung sein.

Die durch die Anzeigeeinheit dargestellten Ausgabeinformationen können beispielsweise ein Auswahlmenü zur Auswahl eines Parameters des Türantriebs umfassen und bei den erfassten Eingabeinformationen kann es sich beispielsweise um einen Bewegungsbefehl zur Festlegung eines auswählbaren Menüelements des Auswahlmenüs handeln. Insbesondere kann es sich bei den Eingabeinformationen um einen Bewegungsbefehl für ein in der Anzeigeeinheit dargestelltes und das auswählbare Menüelement kennzeichnendes Auswahlelement (*cursor*) handeln. Bei der Benutzerschnittstelleneinheit kann dann sowohl in der ersten als auch in der zweiten räumlichen Lage mit dem an der ersten Raumseite der Bedienelementeanordnung, etwa an der Oberseite oder an der rechten Seite der Bedienelementeanordnung, gelegenen Bedienelement ein über dem aktuell auswählbaren Menüelement befindliches Menüelement gekennzeichnet werden und mit dem an der zweiten Raumseite der Bedienelementeanordnung, etwa an der Unterseite oder der linken Seite der Bedienelementeanordnung, gelegenen Bedienelement ein unter dem aktuell auswählbaren Menüelement.

Bei den in der Anzeigeeinheit dargestellten und mittels der Bedienelemente veränderbaren Parametern kann es sich beispielsweise um Eingabeparameter, deren Werte festgelegt werden sollen, etwa um Konfigurationsparameter des Türantriebs, und/oder um Ausgabeparameter, deren Werte angezeigt werden sollen, beispielsweise um Zustandsparameter des Türantriebs, handeln.

Die Anzeigeeinheit kann eine grafische Anzeige, etwa ein LCD-Display, umfassen. Die Bedienelemente können als mechanische Bedienelemente, etwa als Taster, ausgebildet sein. Die Bedienelemente können eine Oberfläche aus Silikon aufweisen. Sie können jeweils eine richtungsabhängige Symbolgrafik umfassen. Die Richtungsabhängigkeit der Symbolgrafik kann insbesondere dazu führen, dass die Symbolgrafik des ersten Bedienelements und/oder die Symbolgrafik des zweiten Bedienelements in der ersten und zweiten räumlichen Lage der Benutzerschnittstelleneinheit jeweils in unterschiedliche Raumrichtungen ausgerichtet sind und dass das erste Bedienelement und/oder das zweite Bedienelement nicht invariant gegenüber einer dem Überführen der Benutzerschnittstelleneinheit aus der ersten Lage in die zweite Lage zugrundeliegenden Lageänderung, etwa gegenüber einer Drehung um 180°, sind.

Die Symbolgrafiken des ersten und zweiten Bedienelements können derart ausgebildet sein, dass die Symbolgrafik des zweiten Bedienelement in der zweiten räumlichen Lage der Benutzerschnittstelleneinheit entlang der gleichen Raumrichtungen ausgerichtet ist wie die Symbolgrafik des ersten Bedienelements in der ersten räumlichen Lage. Die Symbolgrafik kann beispielsweise jeweils einen Aufdruck, etwa auf dem Bedienelement oder neben dem Bedienelement, oder eine Form der Bedienelemente umfassen. Die Symbolgrafik kann beispielsweise jeweils einen Richtungspfeil umfassen.

Das erste Bedienelement kann an der ersten Raumseite der Bedienelementeanordnung, beispielsweise an der linken Seite oder an der Unterseite der Bedienelementeanordnung, und das zweite Bedienelement kann an der zweiten Raumseite der Bedienelementeanordnung, beispielsweise an der rechten Seite oder an der Oberseite der Bedienelementeanordnung, angeordnet sein. Die erste Raumseite kann insbesondere der zweiten Raumseite gegenüberliegend, beispielsweise bezüglich einem Mittelpunkt der Bedienelementeanordnung gegenüberliegend, angeordnet sein.

Die Benutzerschnittstelleneinheit kann beispielsweise dazu ausgebildet sein, zusammen mit dem Türantrieb in jeweils vertikaler Ausrichtung an der angetriebenen Tür montiert zu werden. Insbesondere kann sie dazu ausgebildet sein, dass die Anzeigeeinheit mit der Bedienelementeanordnung jeweils in vertikaler Ausrichtung an der angetriebenen Tür montiert wird, so dass beispielsweise eine Anzeigeebene der Anzeigeeinheit vertikal ausgerichtet ist. Die Benutzerschnittstelleneinheit kann beispielsweise derart vertikal ausgerichtet sein, dass sie parallel zu einem Türblatt der angetriebenen Tür orientiert ist. Die Ausgabeinformationen können dann unabhängig von der Lage des Türantriebs und der Benutzerschnittstelleneinheit jeweils aufrechtstehend dargestellt werden.

Die durch den Türantrieb angetriebene Tür kann beispielsweise als eine Drehtür, auch Schwenktür oder Anschlagtür genannt, ausgebildet sein. Sie kann jedoch auch als Schiebetür ausgebildet sein.

Die Benutzerschnittstelleneinheit kann in den Türantrieb integriert ausgebildet sein, etwa als eine mit dem Türantrieb verbundene Baugruppe oder ein mit dem Türantrieb verbundenes Bauteil. Die Benutzerschnittstelleneinheit kann derart ausgeführt sein, dass sie, unabhängig von einer räumlichen Lage des Türantriebs, relativ zu dem Türantrieb immer die gleiche Lage, insbesondere die gleiche Position und Orientierung, einnimmt und die räumliche Lage der Benutzerschnittstelleneinheit damit durch die räumliche Lage des Türantriebs festgelegt wird. Beispielswiese kann die Lage der Benutzerschnittstelleneinheit in Bezug auf den Türantrieb durch eine Anordnung von elektrischen und/oder mechanischen Verbindungselementen, mit denen die Benutzerschnittstelleneinheit und der Türantrieb, insbesondere eine Grundplatte und/oder eine Steuereinheit des Türantriebs, miteinander verbunden sind, festgelegt werden.

Die Benutzerschnittstelleneinheit kann beispielsweise innerhalb eines Gehäuses des Türantriebs angeordnet sein und beispielsweise nach Montage des Türantriebs durch das Gehäuse verdeckt werden. Sie kann jedoch auch von außen zugänglich und sichtbar an dem Türantrieb angeordnet sein, etwa an einer Außenseite des Gehäuses.

Die Benutzerschnittstelleneinheit und der Türantrieb können beispielsweise dazu ausgebildet sein, bei festgelegter Anschlagseite (DIN links oder DIN rechts) in der ersten räumlichen Lage auf einer Öffnungsseite und in der zweiten räumlichen Lage auf einer Schließseite der angetriebenen Tür montiert zu werden, oder umgekehrt. Dabei können die Benutzerschnittstelleneinheit und der Türantrieb dazu ausgebildet sein, in der zweiten räumlichen Lage jeweils um 180° gedreht zu der ersten räumlichen Lage montiert zu werden. Alternativ oder zusätzlich können die Benutzerschnittstelleneinheit und der Türantrieb dazu ausgebildet sein, jeweils bei Montage auf der gleichen Seite der angetriebenen Tür (Schließseite oder Öffnungsseite) in der ersten räumlichen Lage an einer DIN links angeschlagenen Tür und in der zweiten räumlichen Lage an einer DIN rechts angeschlagenen Tür montiert zu werden, oder umgekehrt. Zusätzlich können die Benutzerschnittstelleneinheit und der Türantrieb dazu ausgebildet sein, mittels Kopfmontage an einer feststehenden Struktur der angetriebenen Tür, etwa an einem Rahmen, und mittels Türblattmontage an einem Türblatt der angetriebenen Tür montiert zu werden.

Bei einer Weiterbildung der Benutzerschnittstelleneinheit ist eine Anordnung der Bedienelemente der Bedienelementeanordnung invariant gegenüber einem Überführen der Benutzerschnittstelleneinheit aus der ersten räumlichen Lage in die zweite räumliche Lage. Dadurch ändern sich innerhalb der Bedienelementeanordnung die relativen räumlichen Positionen, an denen sich in der ersten räumlichen Lage und in der zweiten räumlichen Lage der Benutzerschnittstelleneinheit jeweils Bedienelemente befinden, nicht. Die Benutzerschnittstelleneinheit kann dazu ausgebildet sein, unabhängig von der räumlichen Lage der Benutzerschnittstelleneinheit mittels der in den unterschiedlichen räumlichen Lagen der Benutzerschnittstelleneinheit jeweils an gleicher Position angeordneten Bedienelemente jeweils die gleiche Eingabeinformation zu erfassen. Beispielsweise kann die Benutzerschnittstelleneinheit dazu ausgebildet sein, mittels des jeweiligen an der Oberseite oder an der rechten Seite der Bedienelementeanordnung angeordneten Bedienelements eine Eingabeinformation zu erfassen, welche eine Verschiebung der Anzeigeinformation nach oben bewirkt, und mittels des jeweiligen an der Unterseite oder an der linken Seite der Bedienelementeanordnung angeordneten Bedienelements eine Eingabeinformation, welche eine Verschiebung der Anzeigeinformation nach unten bewirkt

Bei einer Weiterbildung der Benutzerschnittstelleneinheit ist die Bedienelementeanordnung punktsymmetrisch ausgebildet, beispielsweise punktsymmetrisch gegenüber einem Mittelpunkt der Bedienelementeanordnung und/oder einem Mittelpunkt der Anzeigeeinheit. Der Mittelpunkt der Bedienelementeanordnung kann von dem Mittelpunkt der Anzeigeeinheit verschieden sein, oder mit Letzterem zusammenfallen. Dabei können insbesondere die Positionen der Bedienelemente der Bedienelementeanordnung und/oder die richtungsabhängigen Symbolgrafiken der Bedienelemente punktsymmetrisch gegenüber dem Mittelpunkt der Bedienelementeanordnung und/oder dem Mittelpunkt der Anzeigeeinheit ausgebildet sein.

Bei einer Weiterbildung ist die Benutzerschnittstelleneinheit aus der ersten Lage durch eine Rotation der Benutzerschnittstelleneinheit um 180° in die zweite Lage überführbar. Die Rotation um 180° kann insbesondere um eine senkrecht zu einer Anzeigeebene der Anzeigeeinheit ausgerichteten Drehachse ausgeführt werden. Insbesondere bei einer derartigen Ausführung der Benutzerschnittstelleneinheit kann das zweite Bedienelement in der ersten räumlichen Lage der Benutzerschnittstelleneinheit auf der gleichen Raumseite der Bedienelementeanordnung angeordnet wie das erste Bedienelement in der zweiten räumlichen Lage und die Benutzerschnittstelleneinheit kann dazu ausgebildet, in der ersten räumlichen Lage mit dem zweiten Bedienelement die gleiche Eingabeinformation zu erfassen wie mit dem ersten Bedienelement in der zweiten räumlichen Lage.

Bei einer Weiterbildung der Benutzerschnittstelleneinheit ist das erste Bedienelement an einer ersten Seite der Anzeigeeinheit und das zweite Bedienelement an einer zweiten Seite der Anzeigeeinheit angeordnet, wobei sich die erste Seite der Anzeigeeinheit mit dem ersten Bedienelement in der ersten räumlichen Lage der Benutzerschnittstelleneinheit auf der gleichen Raumseite der Anzeigeeinheit befindet wie die zweite Seite der Anzeigeeinheit mit dem zweiten Bedienelement in der zweiten räumlichen Lage. Bevorzugt ist die erste Seite der zweiten Seite gegenüberliegend angeordnet.

Insbesondere können die Anzeigeeinheit und die Bedienelementeanordnung invariant gegenüber der dem Überführen der Benutzerschnittstelleneinheit aus der ersten räumlichen Lage in die zweite räumliche Lage zugrundeliegenden Lageänderung ausgebildet sein, so dass die Lage der Bedienelemente gegenüber der Anzeigeeinheit in der ersten und zweiten räumlichen Lage der Benutzerschnittstelleneinheit gleich ist. Dabei können mit den Bedienelementen, die sich in den unterschiedlichen räumlichen Lagen der Benutzerschnittstelleneinheit jeweils in gleicher Lage gegenüber der Anzeigeeinheit befinden, jeweils die gleichen Eingabeinformationen, insbesondere die gleichen richtungsabhängigen Eingabeinformationen, erfasst werden. Bei einer derartigen Benutzerschnittstelleneinheit ist die logische Anordnung der Bedienelemente unabhängig davon, ob die Benutzerschnittstelleneinheit in der ersten oder zweiten räumlichen Lage angeordnet ist.

Bei einer Weiterbildung der Benutzerschnittstelleneinheit sind das erste Bedienelement und das zweite Bedienelement gegenüber einer dem Überführen der Benutzerschnittstelleneinheit aus der ersten räumlichen Lage in die zweite räumliche Lage zugrundeliegenden Lageänderung der einzelnen Bedienelemente, beispielsweise gegenüber einer Rotation der einzelnen Bedienelemente um 180°, nicht invariant ausgebildet, wobei das erste Bedienelement in der ersten Lage der Benutzerschnittstelleneinheit entlang der gleichen Raumrichtung ausgerichtet ist wie das zweite Bedienelement in der zweiten Lage. Dies ermöglicht es insbesondere, die in der ersten räumlichen Lage der Benutzerschnittstelleneinheit mittels des ersten Bedienelements und in der zweiten räumlichen Lage der Benutzerschnittstelleneinheit mittels des zweiten Bedienelements erfasste Eingabeinformation mittels einer richtungsabhängigen Ausgestaltung der Bedienelemente zu kennzeichnen.

Bedienelemente, die gegenüber der genannten Lageänderung der einzelnen Bedienelemente nicht invariant ausgebildet sind, können insbesondere richtungsabhängig ausgebildet sein. Die Bedienelemente können insbesondere eine richtungsabhängige Symbolgrafik umfassen, welche die über die einzelnen Bedienelemente erfasste jeweilige Eingabeinformation kennzeichnet. Das erste und zweite Bedienelement können dabei die gleiche Symbolgrafik aufweisen, wobei die Symbolgrafik des ersten Bedienelements in einer anderen räumlichen Ausrichtung in Bezug auf die Bedienelementeanordnung ausgerichtet ist wie die Symbolgrafik des zweiten Bedienelements. Die Symbolgrafik des ersten Bedienelements und die Symbolgrafik des zweiten Bedienelements können beispielsweise entgegengesetzt zueinander ausgerichtet sein.

Bei einer Weiterbildung der Benutzerschnittstelleneinheit weist die Bedienelementeanordnung weitere Bedienelemente auf. Soweit keine Unterschiede beschrieben werden, können die weiteren Bedienelemente ausgebildet sein wie das erste und zweite Bedienelement. Die Benutzerschnittstelleneinheit kann insbesondere ein weiteres erstes Bedienelement und ein weiteres zweites Bedienelement umfassen, wobei, soweit keine Unterschiede beschrieben werden, das weitere erste Bedienelement ausgebildet ist wie das erste Bedienelement und das weitere zweite Bedienelement ausgebildet ist wie das zweite Bedienelement.

Insbesondere kann die Benutzerschnittstelleneinheit dazu ausgebildet sein, mit dem weiteren ersten Bedienelement in der ersten räumlichen Lage der Benutzerschnittstelleneinheit die gleiche Eingabeinformation zu erfassen wie mit dem weitern zweiten Bedienelement in der zweiten räumlichen Lage. Bei der betreffenden Eingabeinformation kann es sich beispielsweise um eine Anwahl bzw. Bestätigung des auswählbaren Menüelements und/oder um einen Wechsel in eine untergeordnete Menüebene handeln. Zusätzlich kann die Benutzerschnittstelleneinheit dazu ausgebildet sein, mit dem weitern ersten Bedienelement in der zweiten räumlichen Lage die gleiche Eingabeinformation zu erfassen wie mit dem weiteren zweiten Bedienelement in der ersten räumlichen Lage. Bei der betreffenden Eingabeinformation kann es sich beispielsweise um eine Abwahl des auswählbaren Menüelements und/oder um einen Wechsel in eine übergeordnete Menüebene handeln.

Bei einer Weiterbildung der Benutzerschnittstelleneinheit ist die Benutzerschnittstelleneinheit dazu ausgebildet, in der ersten Lage das erste Bedienelement in einer ersten Farbe und das zweite Bedienelement in einer zweiten Farbe zu beleuchten und in der zweiten Lage das zweite Bedienelement in der ersten Farbe zu beleuchten. Dadurch kann mittels der ersten Farbe die Eingabeinformation, die in der ersten räumlichen Lage der Benutzerschnittstelleneinheit mittels des ersten Bedienelements und in der zweiten räumlichen Lage der Benutzerschnittstelleneinheit mittels des zweiten Bedienelements erfasst wird, durch die erste Farbe gekennzeichnet werden. Dies erleichtert die Bedienbarkeit der Benutzerschnittstelleneinheit.

Zusätzlich kann die Benutzerschnittstelleneinheit dazu ausgebildet sein, das erste Bedienelement in der zweiten räumlichen Lage in der zweiten Farbe zu beleuchten, so dass auch die in der ersten räumlichen Lage mittels des zweiten Bedienelements und in der zweiten räumlichen Lage mittels des ersten Bedienelements erfasste Eingabeinformation durch die zweite Farbe gekennzeichnet wird.

Bei einer Weiterbildung weist die Benutzerschnittstelleneinheit einen Lagesensor zur automatischen Ermittlung der Einbaulage an der angetriebenen Tür auf.

Dadurch kann automatisch ermittelt werden, ob die Benutzerschnittstelleneinheit zusammen mit dem Türantrieb in der ersten räumlichen Lage oder in der zweiten räumlichen Lage angeordnet ist. Die Benutzerschnittstelleneinheit kann dann dazu ausgebildet sein, abhängig von der ermittelten Lage die vorgegebene Benutzereingabe entweder mittels des ersten Bedienelements oder mittels des zweiten Bedienelements zu erfassen. Außerdem kann die Benutzerschnittstelleneinheit dazu ausgebildet sein, die Anzeigeeinheit in Abhängigkeit von der ermittelten Lage derart anzusteuern, dass die Anzeigeinformationen stets in der gleichen räumlichen Orientierung, beispielsweise stets aufrechtstehend, dargestellt werden.

Bei einer Weiterbildung ist die Benutzerschnittstelleneinheit dazu ausgebildet, in der Anzeigeeinheit ein Auswahlelement zum Auswählen einzelner Informationselemente der Anzeigeinformationen, beispielsweise einzelner Menüpunkte eines angezeigten Auswahlmenüs, darzustellen. Außerdem ist die Benutzerschnittstelleneinheit dazu ausgebildet, das Auswahlelement bei Erfassen der in der ersten Lage über das erste Bedienelement und in der zweiten Lage über das zweite Bedienelement erfassten Eingabeinformation jeweils in die gleiche Raumrichtung, beispielsweise nach oben oder nach unten, zu bewegen.

Bei einer Weiterbildung weist die Benutzerschnittstelleneinheit eine Verbindungsmittelanordnung zur Verbindung mit dem Türantrieb auf, wobei die Verbindungsmittelanordnung asymmetrisch gegenüber einem Überführen der Benutzerschnittstelleneinheit aus der ersten räumlichen Lage in die zweite räumliche Lage ausgebildet ist. Dadurch ist die relative Lage der Benutzerschnittstelleneinheit gegenüber dem Türantrieb eindeutig festgelegt und eine fehlerhafte Montage der Benutzerschnittstelleneinheit an dem Türantrieb ausgeschlossen. Außerdem kann die Benutzerschnittstelleneinheit auch bei asymmetrischer Ausführung besonders platzsparend innerhalb des Türantriebs angeordnet werden, da kein zusätzlicher Bauraum freigehalten muss, welcher in beiden räumlichen Lagen Raum für auf der Benutzerschnittstelleneinheit nur einmal vorhandene Komponenten bietet.

Bei einer Weiterbildung ist die Benutzerschnittstelleneinheit als ein Anschlussmodul zur Anbindung von Sensoren und/oder Aktoren des Türantriebs an eine Steuereinheit des Türantriebs, beispielsweise an eine neben der Benutzerschnittstelleneinheit angeordnete Steuereinheit des Türantriebs, ausgebildet. Dies ermöglicht eine besonders platzsparende Anordnung innerhalb des Türantriebs. Zudem können auch Türantriebe, die bereits ein Anschlussmodul ohne Benutzerschnittstelleneinheit aufweisen, durch Austausch des Anschlussmoduls gegen eine als Anschlussmodul ausgebildete Benutzerschnittstelleneinheit mit einer Benutzerschnittstelleneinheit nachgerüstet werden.

Die Sensoren können beispielsweise über Sensorkabel und die Aktoren über Steuerleitungen mit dem Anschlussmodul verbindbar sein. Die Sensoren und/oder Aktoren können innerhalb des Gehäuses des Türantriebs und/oder außerhalb des Gehäuses des Türantriebs angeordnet sein. Die Sensoren können beispielsweise als Bewegungssensoren oder Öffnungstaster ausgeführt sein, die Aktoren beispielsweise als Türöffner oder Motorschlösser.

Bei einer Weiterbildung der Benutzerschnittstelleneinheit ist die Benutzerschnittstelleneinheit dazu ausgebildet, mittels der Bedienelemente Eingabeinformationen zur Konfiguration des Türantriebs zu erfassen. Die Eingabeinformationen können insbesondere Konfigurationsparameter des Türantriebs festlegen. Derartige Konfigurationsparameter können beispielsweise eine Zuordnung des Türantriebs zu einem Gangflügel oder zu einem Standflügel der angetriebenen Tür, eine Öffnungsgeschwindigkeit, eine Offenhaltezeit oder dergleichen festlegen.

Ein Türantrieb zum automatischen Antreiben einer Tür weist die erfindungsgemäße Benutzerschnittstelleneinheit auf, wobei die Benutzerschnittstelleneinheit mit dem Türantrieb verbunden ist. Der Türantrieb ist in einer ersten räumlichen Antriebslage und in einer zweiten räumlichen Antriebslage an der Tür montierbar, wobei die Benutzerschnittstelleneinheit bei Montage des Türantriebs in der ersten Antriebslage in der ersten räumlichen Lage angeordnet ist und bei Montage des Türantriebs in der zweiten Antriebslage in der zweiten räumlichen Lage. Alle Vorteile und Weiterbildungen, die im Zusammenhang mit der erfindungsgemäßen Benutzerschnittstelleneinheit beschrieben werden, beziehen sich auch auf den erfindungsgemäßen Türantrieb und umgekehrt.

Bevorzugt ist der Türantrieb dazu ausgebildet, in der ersten Antriebslage als ein linkshändiger Türantrieb eine DIN links angeschlagene Tür und in der zweiten Lage als ein rechtshändiger Türantrieb eine DIN rechts angeschlagene Tür anzutreiben.

Der Türantrieb kann insbesondere dazu ausgebildet sein, in der ersten Antriebslage an einer DIN links angeschlagenen Tür auf der Öffnungsseite und bei einer DIN rechts angeschlagenen Tür auf der Schließseite montiert zu werden, und in der zweiten Antriebslage an einer DIN rechts angeschlagenen Tür auf der Öffnungsseite und an einer DIN links angeschlagenen Tür auf der Schließseite.

Die Erfindung wird nachfolgend anhand von Figuren erläutert. Dabei zeigen in jeweils schematischer Darstellung:
- Fig. 1: eine erste Ausführungsform einer Benutzerschnittstelleneinheit für einen Türantrieb in einer ersten räumlichen Lage;
- Fig. 2: die erste Ausführungsform der Benutzerschnittstelleneinheit in einer zweiten räumlichen Lage;
- Fig. 3: eine zweite Ausführungsform einer Benutzerschnittstelleneinheit für einen Türantrieb in einer ersten räumlichen Lage;
- Fig. 4: die zweite Ausführungsform der Benutzerschnittstelleneinheit in einer zweiten räumlichen Lage;
- Fig. 5: eine perspektivische Ansicht der zweiten Ausführungsform der Benutzerschnittstelleneinheit;
- Fig. 6: einen Türantrieb mit der zweiten Ausführungsform der Benutzerschnittstelleneinheit in einer perspektivischen Darstellung;
- Fig. 7: eine vergrößerte Aufsicht auf den Türantrieb mit der zweiten Ausführungsform der Benutzerschnittstelleneinheit in der ersten räumlichen Lage;
- Fig. 8: eine Anordnung des Türantriebs mit der zweiten Ausführungsform der Benutzerschnittstelleneinheit an einer DIN links angeschlagenen Tür in der ersten räumlichen Lage bei Kopfmontage;
- Fig. 9: eine Anordnung des Türantriebs mit der zweiten Ausführungsform der Benutzerschnittstelleneinheit an einer DIN rechts angeschlagenen Tür in der zweiten räumlichen Lage bei Kopfmontage; und
- Fig. 10: eine Anordnung des Türantriebs mit der zweiten Ausführungsform der Benutzerschnittstelleneinheit an der DIN links angeschlagenen Tür bei Türblattmontage.

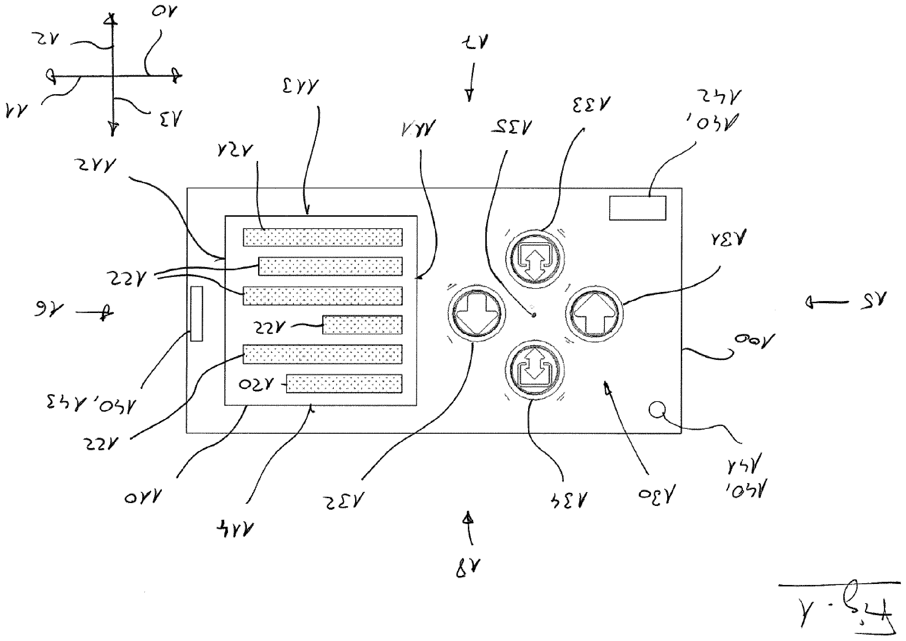

Fig. 1 zeigt eine erste Ausführungsform einer Benutzerschnittstelleneinheit 100 für einen nicht dargestellten Türantrieb in einer ersten räumlichen Lage. Die Benutzerschnittstelleneinheit 100 umfasst eine Anzeigeeinheit 110 und eine Bedienelementeanordnung 130.

Die Anzeigeeinheit 110 weist eine erste Seite 111, eine der ersten Seite 111 gegenüberliegend und parallel zu der ersten Seite 111 angeordnete zweite Seite 112, sowie eine senkrecht zu der ersten Seite 111 und der zweiten Seite 112 orientierte dritte Seite 113 und eine der dritten Seite 113 gegenüberliegend und parallel zu der dritten Seite 113 angeordnete vierte Seite 114 auf. Die Bedienelementeanordnung 130 umfasst ein erstes Bedienelement 131, ein zweites Bedienelement 132, ein weiteres erstes Bedienelement 133, sowie ein weiteres zweites Bedienelement 134. In Bezug auf einen Mittelpunkt 135 der Bedienelementeanordnung 130 ist das zweite Bedienelement 132 dem ersten Bedienelement 131 und das weitere zweite Bedienelement 134 dem weiteren ersten Bedienelement 133 gegenüberliegend angeordnet. Die Bedienelementeanordnung 130 ist punktsymmetrisch gegenüber dem Mittelpunkt 135 der Bedienelementeanordnung 130 ausgebildet und vollständig an der ersten Seite 111 der Anzeigeeinheit 110 angeordnet.

Die Benutzerschnittstelleneinheit 100 umfasst außerdem eine Verbindungsmittelanordnung 140 mit einem ersten Verbindungselement 141, einem zweiten Verbindungselement 142 und einem dritten Verbindungselement 143. Die Verbindungselemente 141, 142, 143 dienen zur elektrischen und mechanischen Verbindung der Benutzerschnittstelleneinheit 100 mit einem Türantrieb.

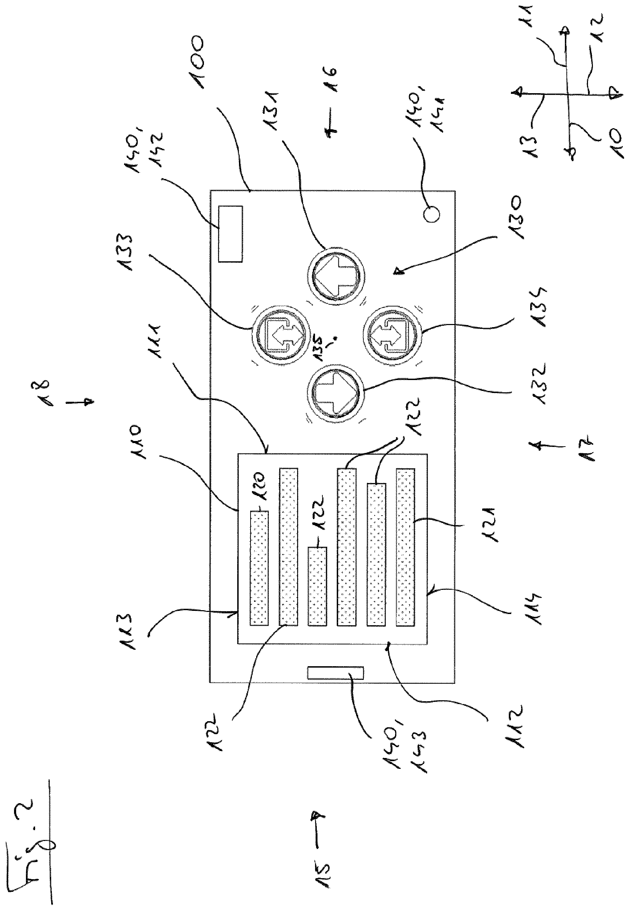

Während die Benutzerschnittstelleneinheit 100 Fig. 1 in der ersten räumlichen Lage dargestellt ist, ist sie in Fig. 2 in einer zweiten räumlichen Lage dargestellt. Eine Lageänderung, mit der die Benutzerschnittstelleneinheit 100 aus der ersten räumlichen Lage in die zweite räumliche Lage überführt wird, besteht in einer Drehung der Benutzerschnittstelleneinheit 100 um 180° um eine senkrecht zu einer Anzeigeebene der Anzeigeeinheit 110 orientierten Drehachse.

In der ersten räumlichen Lage der Benutzerschnittstelleneinheit 100 ist die erste Seite 111 der Anzeigeeinheit 110 auf einer ersten Raumseite 15, die zweite Seite 112 der Anzeigeeinheit 110 auf einer der ersten Raumseite 15 gegenüberliegenden zweiten Raumseite 16, die dritte Seite 113 der Anzeigeeinheit 110 auf einer dritten Raumseite 17 und die vierte Seite 114 der Anzeigeeinheit 110 auf einer der dritten Raumseite 17 gegenüberliegenden vierten Raumseite 18 der Anzeigeeinheit 110 angeordnet. Die erste Seite 111 begrenzt dabei die Anzeigeeinheit 110 in einer ersten Raumrichtung 10, die zweite Seite 112 in einer zweiten Raumrichtung 11, die dritte Seite 113 in einer dritten Raumrichtung 12 und die vierte Seite 114 in einer vierten Raumrichtung 13.

In der zweiten räumlichen Lage der Benutzerschnittstelleneinheit 100 ist die erste Seite 111 der Anzeigeeinheit 110 auf der zweiten Raumseite 16, die zweite Seite 112 der Anzeigeeinheit 110 auf der ersten Raumseite 15, die dritte Seite 113 der Anzeigeeinheit 110 auf der vierten Raumseite 18 und die vierte Seite 114 der Anzeigeeinheit 110 auf der dritten Raumseite 17 der Anzeigeeinheit 110 angeordnet. Die erste Seite 111 begrenzt dabei die Anzeigeeinheit 110 jeweils in der zweiten Raumrichtung 11, die zweite Seite 112 in der ersten Raumrichtung 10, die dritte Seite 113 in der vierten Raumrichtung 13 und die vierte Seite 114 in der dritten Raumrichtung 12.

In der in Fig. 1 dargestellten ersten räumlichen Lage der Benutzerschnittstelleneinheit 100 ist bezüglich dem Mittelpunkt 135 der Bedienelementeanordnung 130 das erste Bedienelement 131 auf der ersten Raumseite 15, das zweite Bedienelement 132 auf der zweiten Raumseite 16, das weitere erste Bedienelement 133 auf der dritten Raumseite 17 und das weitere zweite Bedienelement 134 auf der vierten Raumseite 18 angeordnet. In der in Fig. 2 dargestellten zweiten räumlichen Lage der Benutzerschnittstelleneinheit 100 ist bezüglich dem Mittelpunkt 135 der Bedienelementeanordnung 130 das erste Bedienelement 131 auf der zweiten Raumseite 16, das zweite Bedienelement 132 auf der ersten Raumseite 15, das weitere erste Bedienelement 133 auf der vierten Raumseite 18 und das weitere zweite Bedienelement 134 auf der dritten Raumseite 17 der Bedienelementeanordnung 130 angeordnet.

Bei vertikaler Ausrichtung der Benutzerschnittstelleneinheit 100 bildet die erste Raumseite 15 eine linke Seite, die zweite Raumseite 16 eine rechte Seite, die dritte Raumseite 17 eine Unterseite und die vierte Raumseite 18 eine Oberseite. Die erste Raumrichtung 10 ist dann nach links, die zweite Raumrichtung 11 nach rechts, die dritte Raumrichtung 12 nach unten und die vierte Raumrichtung 13 nach oben ausgerichtet.

Das erste und zweite Bedienelement 131, 132 weisen jeweils eine richtungsabhängige Symbolgrafik, nämlich einen Pfeil, auf. Die Symbolgrafiken des ersten und zweiten Bedienelements 131, 132 sind einander entgegengesetzt ausgerichtet, so dass sie mittels der dem Überführen der Benutzerschnittstelleneinheit 100 aus der ersten Lage in die zweite Lage zugrundeliegenden Lageänderung, nämlich mittels einer Drehung um 180° um die senkrecht zu der Anzeigeebene der Anzeigeeinheit 110 orientierte Drehachse, ineinander überführt werden können. Das weitere erste und das weitere zweite Bedienelement 133, 134 weisen jeweils eine weitere richtungsabhängige Symbolgrafik auf, welche sich von der Symbolgrafik des ersten und zweiten Bedienelements 131, 132 unterscheidet. Die weiteren Symbolgrafiken des weiteren ersten und weiteren zweiten Bedienelements 133, 134 sind ebenfalls einander entgegengesetzt ausgerichtet und können mittels der genannten Lageänderung ineinander überführt werden.

Insbesondere weisen damit das erste Bedienelement 131 in der ersten räumlichen Lage und das zweite Bedienelement 132 in der zweiten räumlichen Lage, sowie das zweite Bedienelement 132 in der ersten räumlichen Lage und das erste Bedienelement 131 in der zweiten räumlichen Lage jeweils die gleiche räumliche Orientierung auf. Analoges gilt für das erste weitere Bedienelement 133 und das zweite weitere Bedienelement 134.

Die Anzeigeeinheit 110 ist dazu ausgebildet, sowohl in der ersten räumlichen Lage als auch in der zweiten räumlichen Lage eine an der Oberseite der Anzeigeeinheit 110 angezeigte erste Ausgabeinformationen 120 über einer an der Unterseite der Anzeigeeinheit 110 angezeigten zweiten Ausgabeinformation 121 anzuzeigen und zwischen der ersten Ausgabeinformationen 120 und der zweiten Ausgabeinformationen 121 in jeweils gleicher Reihenfolge weitere Ausgabeinformationen 122. Damit zeigt die Anzeigeeinheit 110 die Ausgabeinformationen 120, 121, 122 sowohl in der ersten räumlichen Lage als auch in der zweiten räumlichen Lage in der gleichen räumlichen Orientierung an. In der ersten räumlichen Lage ist die erste Ausgabeinformation 120 an der vierten Seite 114 der Anzeigeeinheit 110 und die zweite Ausgabeinformation 121 an der dritten Seite 113 der Anzeigeeinheit 110 angeordnet, in der zweiten räumlichen Lage ist es umgekehrt.

Die einzelnen Ausgabeinformationen 120, 121, 122 bilden jeweils Menüpunkte eines in der Anzeigeeinheit 110 dargestellten Auswahlmenüs. Ein Auswahlelement zur Auswahl der einzelnen Menüpunkte wird in der ersten räumlichen Lage mittels des ersten Bedienelements 131 und in der zweiten räumlichen Lage mittels des zweiten Bedienelements 132 in die dritte Raumrichtung 17 nach unten verschoben. Außerdem wird das Auswahlelement in der ersten räumlichen Lage mittels des zweiten Bedienelements 132 und in der zweiten räumlichen Lage mittels des ersten Bedienelements 131 in die vierte Raumrichtung 18 nach oben verschoben.

In der ersten räumlichen Lage wird mittels des weiteren ersten Bedienelements 133 der auswählbare Menüpunkt zur Änderung oder zur Anzeige eines untergeordneten Untermenüs angewählt und mittels des weiteren zweiten Bedienelements 134 die Anwahl des Menüpunkts zum Beenden der Änderung oder zur Anzeige einer übergeordneten Menüebene aufgehoben. In der zweiten räumlichen Lage ist es umgekehrt.

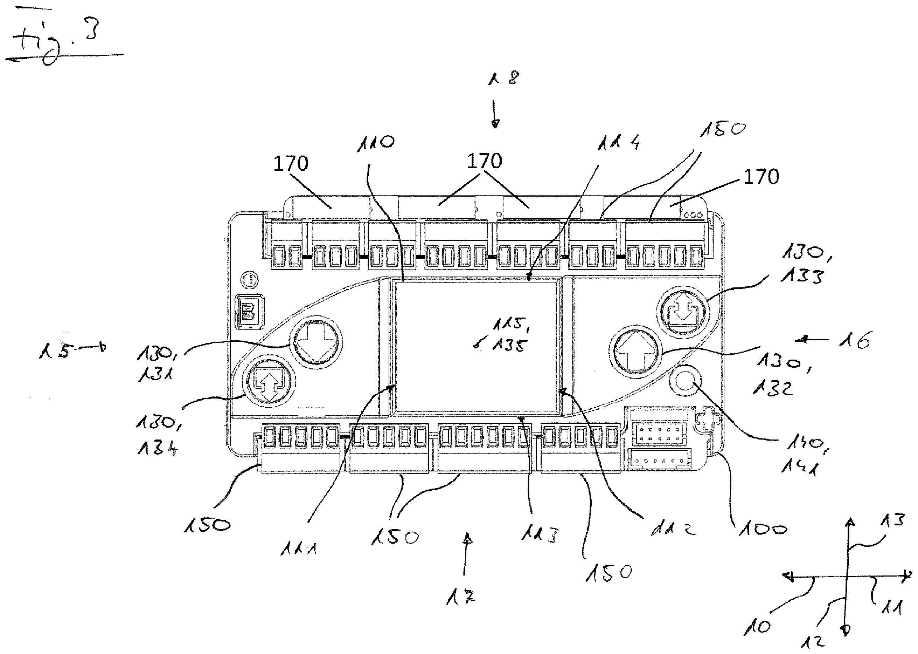

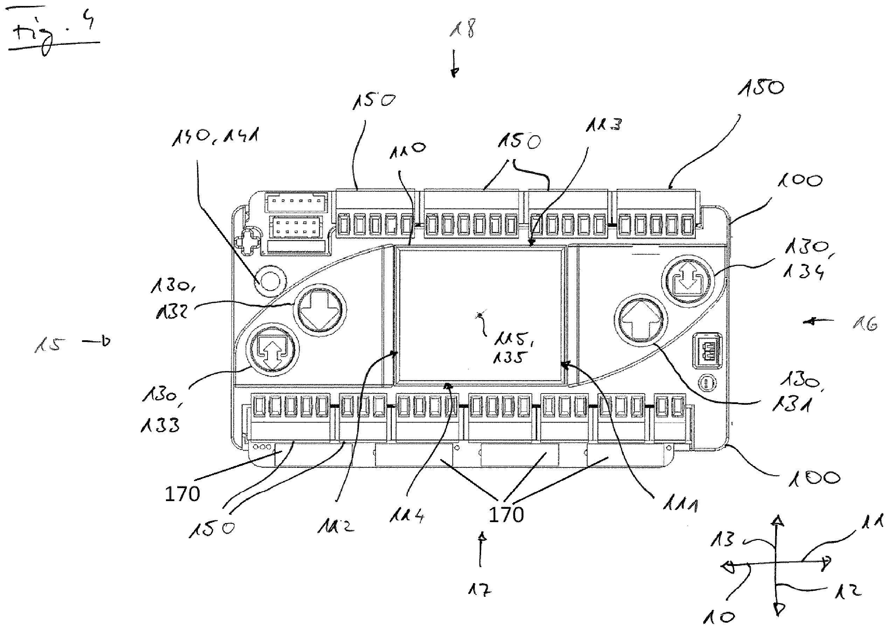

Fig. 3 zeigt eine zweite Ausführungsform einer Benutzerschnittstelleneinheit 100 in einer ersten räumlichen Lage und Fig. 4 zeigt die zweite Ausführungsform der Benutzerschnittstelleneinheit 100 in einer zweiten räumlichen Lage. Soweit keine Unterschiede dargestellt oder beschrieben sind, ist die Benutzerschnittstelleneinheit 100 in der zweiten Ausführungsform ausgebildet, wie es für die erste Ausführungsform der Benutzerschnittstelleneinheit 100 dargestellt und beschrieben ist.

In der zweiten Ausführungsform ist die Bedienelementeanordnung 130 punktsymmetrisch in Bezug auf einen Mittelpunkt 115 der Anzeigeeinheit 110 ausgebildet. Dabei sind das erste Bedienelement 131 und das weitere zweite Bedienelement 134 an der ersten Seite 111 der Anzeigeeinheit 110 und das zweite Bedienelement 132, sowie das weitere erste Bedienelement 133 an der zweiten Seite 112 der Anzeigeeinheit 110 angeordnet. Dies hat zur Folge, dass das erste Bedienelement 131 und das weitere zweite Bedienelement 134 in der ersten räumlichen Lage der Benutzerschnittstelleneinheit 100 auf der ersten Raumseite 15 der Anzeigeeinheit 110 und in der zweiten räumlichen Lage der Benutzerschnittstelleneinheit 100 auf der zweiten Raumseite 16 der Benutzerschnittstelleneinheit 100 angeordnet sind. Analog sind das zweite Bedienelement 132 und das weitere erste Bedienelement 133 in der ersten räumlichen Lage der Benutzerschnittstelleneinheit 100 auf der zweiten Raumseite 16 der Anzeigeeinheit 110 und in der zweiten räumlichen Lage der Benutzerschnittstelleneinheit 100 auf der ersten Raumseite 15 der Anzeigeeinheit 110 angeordnet.

Die Benutzerschnittstelleneinheit 100 ist als eine Anschlusseinheit zur Verbindung des Türantriebs mit Sensoren und Aktoren ausgebildet. Hierzu umfasst die Benutzerschnittstelleneinheit 100 eine Anschlusselementeanordnung mit mehreren Anschlusselementen 150, welche als Klemmkontakte ausgeführt sind. Die Anschlusselementeanordnung ist nicht invariant gegenüber der Lageänderung zum Überführen der Benutzerschnittstelleneinheit 100 aus der ersten räumlichen Lage in die zweite räumliche Lage. Die Anschlusselemente 150 sind an der dritten Seite 113 und der vierten Seite 114 der Anzeigeeinheit 110 angeordnet. Die Anzeigeeinheit 110 und die Bedienelementeanordnung 130 befinden sich zwischen den Anschlusselementen 150 der Anschlusselementeanordnung.

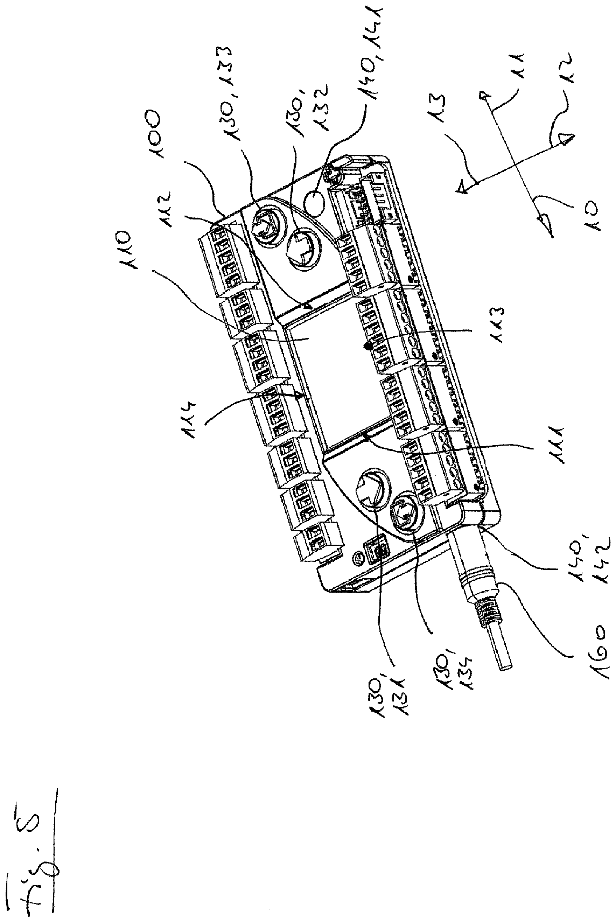

Fig. 5 zeigt die zweite Ausführungsform der Benutzerschnittstelleneinheit 100 in einer perspektivischen Ansicht. Bei der zweiten Ausführungsform der Benutzerschnittstelleneinheit 100 ist das zweite Verbindungselement 142 als eine Steckverbindung zum Anschluss eines Datenkabels 160, welches die Benutzerschnittstelleneinheit 100 mit einem Servicetool oder mit einem Programmiergerät oder mit dem Türantrieb verbindet, ausgebildet. Die Benutzerschnittstelleneinheit 100 ist dazu ausgebildet, über das Datenkabel 160 auf die gleiche Weise mit einem Programmieranschluss eines Türantriebs verbunden zu werden, wie ein externes Programmier- und/oder Lesegerät.

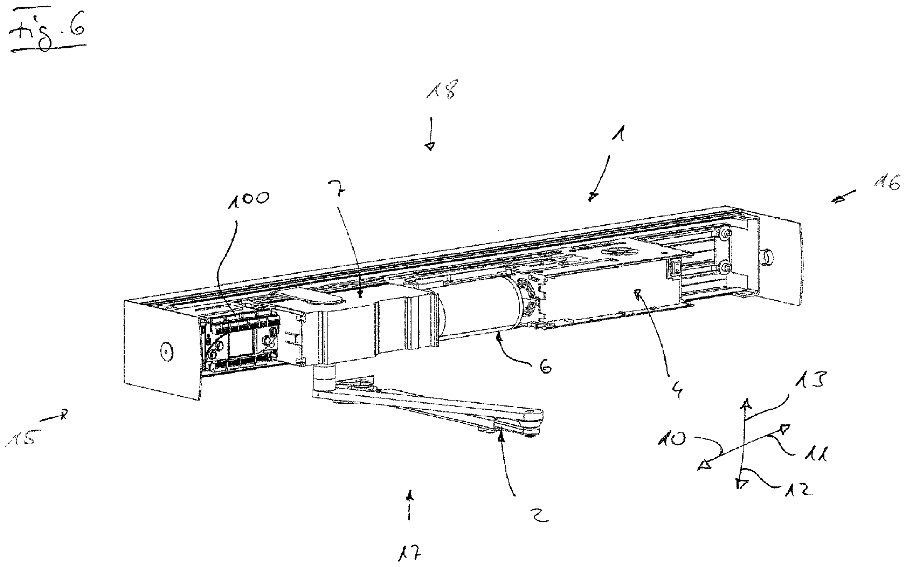

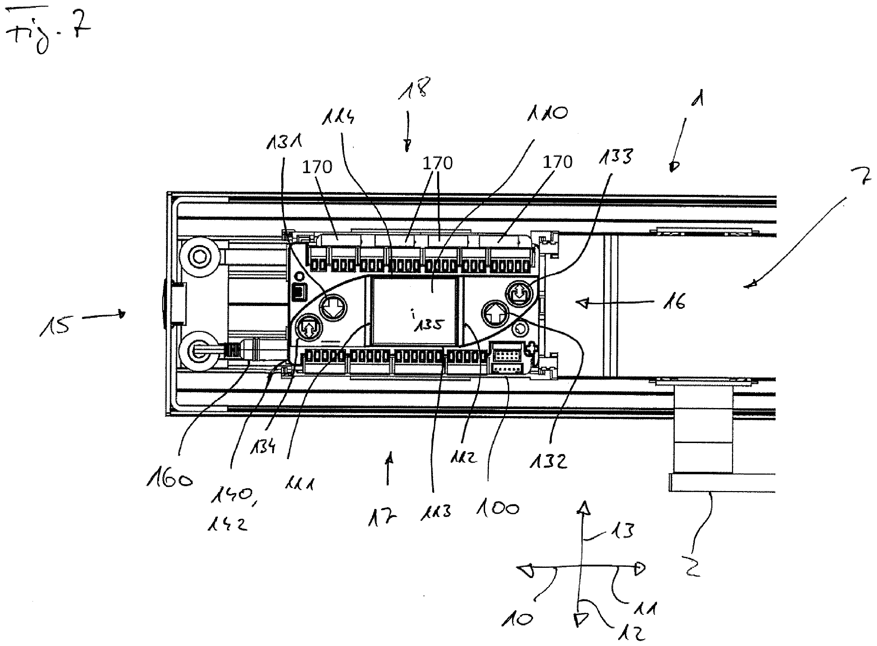

Die Figuren 6 und 7 zeigen jeweils eine Anordnung der zweiten Ausführungsform der Benutzerschnittstelleneinrichtung 100 an einem Türantrieb 1. Der Türantrieb 1 umfasst neben der Benutzerschnittstelleneinheit 100 eine Steuereinheit 4, einen elektrischen Motor 6, sowie ein Getriebe 7, welches auf einer Antriebsseite mit dem Motor 6 verbunden ist. Die Steuereinheit 4, der Motor 6, das Getriebe 7 sowie die Benutzerschnittstelleneinrichtung 100 sind nebeneinander an einer Grundplatte des Türantriebs 1 befestigt und können mit einer nicht dargestellten Gehäuseabdeckung des Türantriebs 1 abgedeckt werden. Zur Übertragung der durch den Motor 6 erzeugten Antriebskraft auf die anzutreibende Tür verfügt der Türantrieb 1 über ein mit einer Abtriebsseite des Getriebes 7 verbundenes und als Gestänge ausgebildetes Verbindungselement 2.

Auf der Grundplatte des Türantriebs 1 sind der Reihe nach die Benutzerschnittstelleneinheit 100, das Getriebe 7, der Motor 6 und die Steuereinheit 4 angeordnet. Die Steuereinheit 4 ist mit dem Motor 6 über Steuerleitungen verbunden und dient dazu, eine Bewegung des Motors 6 zu steuern. Über die in den Figuren 3, 4 und 7 dargestellten Anschlusselemente 170 ist die Benutzerschnittstelleneinheit 100 über nicht dargestellte Datenübertragungselemente, insbesondere Flachbandkabel, mit der Steuereinheit 4 des Türantriebs 1 verbunden, um eine Konfiguration der Steuereinheit 4 zu ermöglichen und einen Status der Steuereinheit 4 anzuzeigen.

Der Türantrieb 1, insbesondere die Steuereinheit 4, sind dazu ausgebildet, nicht nur über die Benutzerschnittstelleneinheit 100, sondern auch über ein externes Programmiergerät konfiguriert zu werden. Hierzu kann das externe Programmiergerät auf die gleiche Weise mit dem Programmieranschluss des Türantriebs 1 verbunden werden, wie die Benutzerschnittstelleneinheit 100 oder mittels des Datenkabels 160 der Benutzerschnittstelleneinheit 100. Ein Antriebssystem kann daher neben dem Türantrieb 1 und der Benutzerschnittstelleneinheit 100 auch das genannte Programmiergerät umfassen. Der Türantrieb 1 kann dann entweder zur Konfiguration mit dem externen Programmiergerät verbunden werden oder es kann die Benutzerschnittstelleneinheit 100 in dem Türantrieb 1 angeordnet und zur Konfiguration mit der Steuereinheit 4 verbunden werden. Eine Benutzerschnittstelle des Programmiergeräts kann analog zu der Benutzerschnittstelle der Benutzerschnittstelleneinheit 100 ausgeführt sein und insbesondere die Anzeigeeinheit 110 und die Bedienelementeanordnung 130 umfassen. Zudem können die Benutzerschnittstelleneinheit 100 und das Programmiergerät dazu ausgebildet sein, mit der Steuereinheit 4 über die Programmierschnittstelle mittels der gleichen Datencodierung zu kommunizieren.

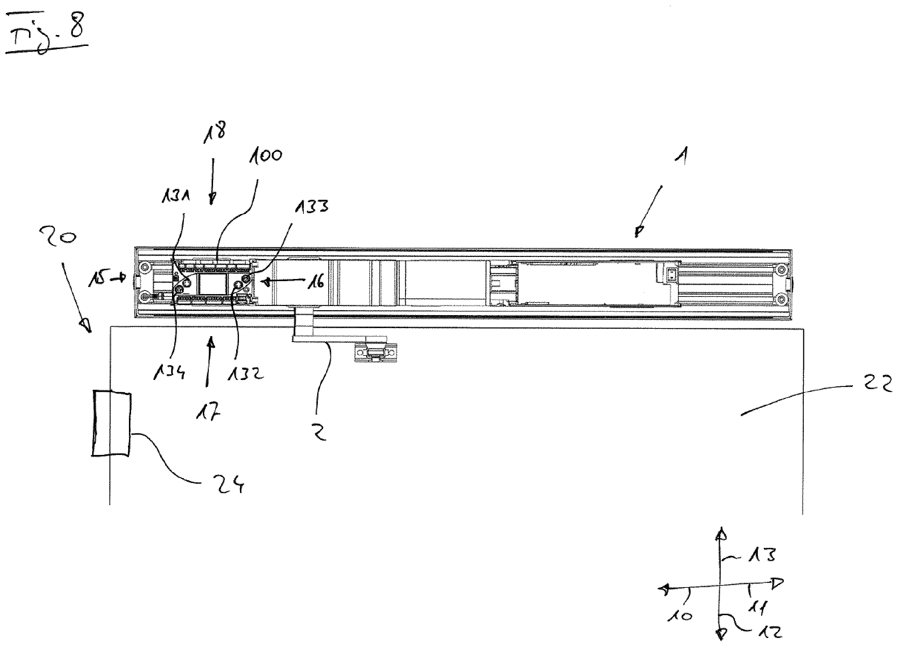

Fig. 8 zeigt eine Anordnung des in den Figuren 6 und 7 dargestellten Türantriebs 1 bei Kopfmontage an einer DIN links angeschlagenen Tür 20. In Fig. 8 ist die Tür 20 in Aufsicht auf eine Öffnungsseite dargestellt, so dass ein linksseitig an der Tür 20 angeordnetes Türband 24 sichtbar ist. Bei der Kopfmontage ist der Türantrieb 1 mit der Grundplatte an einem Rahmen der Tür 20 befestigt und über das Verbindungselement 2 mit einem unter dem Türantrieb 1 angeordneten Türblatt 22 der Tür 20 mechanisch verbunden. Dabei befindet sich der Türantrieb 20 in der vierten Raumrichtung 13 über der Tür 20. Der Türantrieb 1 ist bei der in Fig. 8 dargestellten Montage auf der Öffnungsseite einer links angeschlagenen Tür 20 in einer ersten Antriebslage montiert, bei der sich die Benutzerschnittstelleneinheit 100 in ihrer ersten räumlichen Lage befindet und an der ersten Raumseite 15 des Türantriebs 1 angeordnet ist.

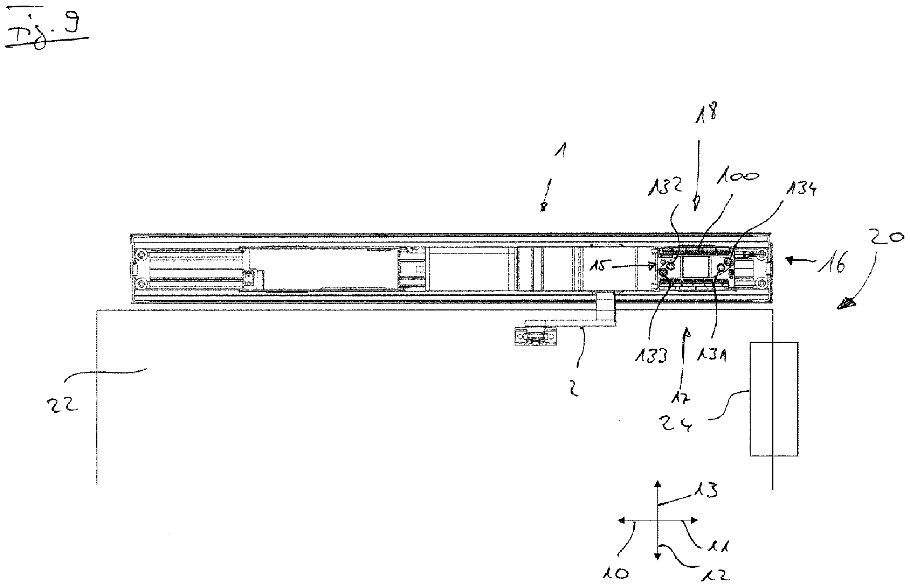

Fig. 9 zeigt eine Anordnung des Türantriebs 1 bei Kopfmontage an einer DIN rechts angeschlagenen Tür 20. In Fig. 9 ist die Tür 20 ebenfalls in Aufsicht auf die Öffnungsseite dargestellt, so dass ein rechtsseitig an der Tür 20 angeordnetes Türband 24 sichtbar ist. Der Türantrieb 20 ist in einer zweiten Antriebslage montiert, bei der sich die Benutzerschnittstelleneinheit 100 in ihrer zweiten räumlichen Lage befindet und auf der zweiten Raumseite 16 des Türantriebs 1 angeordnet ist.

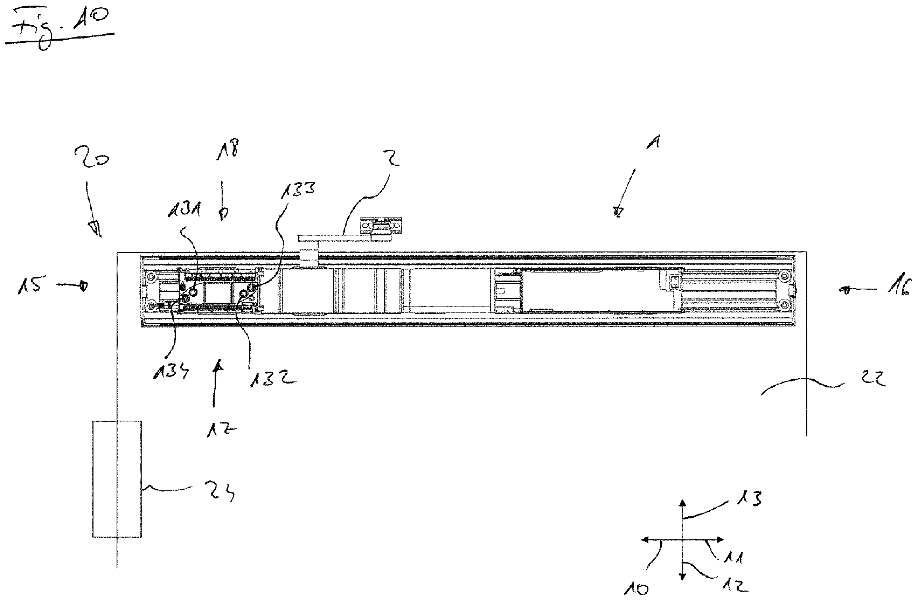

Fig. 10 zeigt eine Anordnung des Türantriebs 1 bei Türblattmontage an der DIN links angeschlagenen Tür 20, wobei die Tür 20 und der Türantrieb 1 in Aufsicht auf die Öffnungsseite der Tür 20 dargestellt sind. Wie bei der in Fig. 8 dargestellten Kopfmontage ist der Türantrieb 20 in der ersten Antriebslage montiert, bei der sich die Benutzerschnittstelleneinheit 100 in ihrer ersten räumlichen Lage befindet und auf der ersten Raumseite 15 des Türantriebs 1 angeordnet ist. Anders als bei der in Fig. 8 dargestellten Kopfmontage ist das Verbindungselement 2 bei der in Fig. 10 dargestellten Türblattmontage nicht an einer in Richtung der dritten Raumrichtung 17 liegenden Unterseite des Getriebes 7, sondern an einer in Richtung der vierten Raumrichtung 18 liegenden Oberseite des Getriebes 7 mit dem Getriebe 7 verbunden.

Bei einer nicht dargestellten Montage des Türantriebs 1 auf der Schließseite einer Tür wird der Türantrieb bei einer DIN links angeschlagenen Tür in der zweiten Antriebslage und bei einer DIN rechts angeschlagenen Tür 20 in der ersten Antriebslage montiert.

### Bezugszeichenliste

- 1: Türantrieb
- 2: Verbindungselement
- 4: Steuereinheit
- 6: Motor
- 7: Getriebe
- 10: erste Raumrichtung
- 11: zweite Raumrichtung
- 12: dritte Raumrichtung
- 13: vierte Raumrichtung
- 15: erste Raumseite
- 16: zweite Raumseite
- 17: dritte Raumseite
- 18: vierte Raumseite
- 20: Tür
- 22: Türblatt
- 24: Türband
- 100: Benutzerschnittstelleneinheit
- 110: Anzeigeeinheit
- 111: erste Seite
- 112: zweite Seite
- 113: dritte Seite
- 114: vierte Seite
- 115: Mittelpunkt
- 120: erste Ausgabeinformationen
- 121: zweite Ausgabeinformation
- 122: weitere Ausgabeinformationen
- 130: Bedienelementeanordnung
- 131: erstes Bedienelement
- 132: zweites Bedienelement
- 133: weiteres erstes Bedienelement
- 134: weiteres zweites Bedienelement
- 135: Mittelpunkt
- 140: Verbindungsmittelanordnung
- 141: erstes Verbindungselement
- 142: zweites Verbindungselement
- 143: drittes Verbindungselement
- 150: Anschlusselement
- 160: Datenkabel
- 170: Anschlusselement

## Patentansprüche

1. Benutzerschnittstelleneinheit (100) für einen automatischen Türantrieb (1) mit einer Anzeigeeinheit (110) zur Ausgabe von Ausgabeinformationen (120, 121, 122) und einer Bedienelementeanordnung (130) zum Erfassen von Eingabeinformationen,
wobei die Benutzerschnittstelleneinheit (100) zusammen mit dem Türantrieb (1) in einer ersten räumlichen Lage und in einer zweiten räumlichen Lage an einer durch den Türantrieb (1) antreibbaren Tür (20) montierbar ist, wobei die Bedienelementeanordnung (130) ein erstes Bedienelement (131) und ein zweites Bedienelement (132) umfasst,
wobei das erste Bedienelement (131) in der ersten räumlichen Lage der Benutzerschnittstelleneinheit (100) auf der gleichen Raumseite (15) der Bedienelementeanordnung (130) angeordnet ist wie das zweite Bedienelement (132) in der zweiten räumlichen Lage,
wobei die Anzeigeeinheit (110) dazu ausgebildet ist, die angezeigten Ausgabeinformationen (120, 121, 122) sowohl in der ersten räumlichen Lage als auch in der zweiten räumlichen Lage der Benutzerschnittstelleneinheit (100) in der gleichen räumlichen Orientierung anzuzeigen, und
wobei die Benutzerschnittstelleneinheit (100) dazu ausgebildet ist, in der ersten räumlichen Lage mit dem ersten Bedienelement (131) die gleiche Eingabeinformation zu erfassen wie mit dem zweiten Bedienelement (132) in der zweiten räumlichen Lage.

2. Benutzerschnittstelleneinheit (100) nach Anspruch 1, **dadurch gekennzeichnet,**
**dass** eine Anordnung der Bedienelemente (131, 132) der Bedienelementeanordnung (130) invariant gegenüber einem Überführen der Benutzerschnittstelleneinheit (100) aus der ersten Lage in die zweite Lage ist.

3. Benutzerschnittstelleneinheit (100) nach einem der vorhergehenden Ansprüche, **dadurch gekennzeichnet,**
**dass** die Bedienelementeanordnung (130) punktsymmetrisch ausgebildet ist, beispielsweise punktsymmetrisch gegenüber einem Mittelpunkt (135) der Bedienelementeanordnung und/oder einem Mittelpunkt (115) der Anzeigeeinheit (110).

4. Benutzerschnittstelleneinheit (100) nach einem der vorhergehenden Ansprüche, **dadurch gekennzeichnet,**
**dass** die Benutzerschnittstelleneinheit (100) aus der ersten Lage durch eine Rotation der Benutzerschnittstelleneinheit (100) um 180° in die zweite Lage überführbar ist.

5. Benutzerschnittstelleneinheit (100) nach einem der vorhergehenden Ansprüche, **dadurch gekennzeichnet,**
**dass** das erste Bedienelement (131) an einer ersten Seite (111) der Anzeigeeinheit (110) und das zweite Bedienelement (132) an einer zweiten Seite (112) der Anzeigeeinheit (110) angeordnet ist, und
**dass** sich die erste Seite (111) der Anzeigeeinheit (110) mit dem ersten Bedienelement (131) in der ersten räumlichen Lage der Benutzerschnittstelleneinheit (100) auf der gleichen Raumseite (15) der Anzeigeeinheit (110) befindet wie die zweite Seite (112) der Anzeigeeinheit (110) mit dem zweiten Bedienelement (132) in der zweiten räumlichen Lage.

6. Benutzerschnittstelleneinheit (100) nach Anspruch 5, **dadurch gekennzeichnet,**
**dass** die erste Seite (111) der zweiten Seite (112) gegenüberliegend angeordnet ist.

7. Benutzerschnittstelleneinheit (100) nach einem der vorhergehenden Ansprüche, **dadurch gekennzeichnet,**
**dass** das erste Bedienelement (131) und das zweite Bedienelement (132) gegenüber einer dem Überführen der Benutzerschnittstelleneinheit (100) aus der ersten Lage in die zweite Lage zugrundeliegenden Lageänderung der einzelnen Bedienelemente, beispielsweise gegenüber einer Rotation der einzelnen Bedienelemente um 180°, nicht invariant ausgebildet sind, und
**dass** das erste Bedienelement (131) in der ersten Lage der Benutzerschnittstelleneinheit (100) entlang der gleichen Raumrichtung ausgerichtet ist wie das zweite Bedienelement (132) in der zweiten Lage.

8. Benutzerschnittstelleneinheit (100) nach einem der vorhergehenden Ansprüche, **dadurch gekennzeichnet,**
**dass** die Bedienelementeanordnung (130) weitere Bedienelemente (133, 134) aufweist.

9. Benutzerschnittstelleneinheit (100) nach einem der vorhergehenden Ansprüche, **dadurch gekennzeichnet,**
**dass** die Benutzerschnittstelleneinheit (100) dazu ausgebildet ist, in der ersten Lage das erste Bedienelement (131) in einer ersten Farbe und das zweite Bedienelement (132) in einer zweiten Farbe zu beleuchten, und
**dass** die Benutzerschnittstelleneinheit (100) dazu ausgebildet ist, in der zweiten Lage das zweite Bedienelement (131) in der ersten Farbe zu beleuchten.

10. Benutzerschnittstelleneinheit (100) nach einem der vorhergehenden Ansprüche, **dadurch gekennzeichnet,**
**dass** die Benutzerschnittstelleneinheit (100) einen Lagesensor zur automatischen Ermittlung der Einbaulage an der angetriebenen Tür (20) aufweist.

11. Benutzerschnittstelleneinheit (100) nach einem der vorhergehenden Ansprüche, **dadurch gekennzeichnet,**
**dass** die Benutzerschnittstelleneinheit (100) dazu ausgebildet ist, in der Anzeigeeinheit (110) ein Auswahlelement zum Auswählen einzelner Informationselemente der Anzeigeinformationen (120, 121, 122), beispielsweise Menüpunkte eines angezeigten Auswahlmenüs, darzustellen, und
wobei die Benutzerschnittstelleneinheit (100) dazu ausgebildet ist, das Auswahlelement bei Erfassen der in der ersten Lage über das erste Bedienelement (131) und in der zweiten Lage über das zweite Bedienelement (132) erfassten Eingabeinformation jeweils in die gleiche Raumrichtung (10, 11, 12, 13), beispielsweise nach oben oder nach unten, zu bewegen.

12. Benutzerschnittstelleneinheit (100) nach einem der vorhergehenden Ansprüche, **dadurch gekennzeichnet,**
**dass** die Benutzerschnittstelleneinheit (100) eine Verbindungsmittelanordnung (140) zur Verbindung mit dem Türantrieb (1) aufweist, und
**dass** die Verbindungsmittelanordnung (140) asymmetrisch gegenüber einem Überführen der Benutzerschnittstelleneinheit (100) aus der ersten Lage in die zweite Lage ausgebildet ist.

13. Benutzerschnittstelleneinheit (100) nach einem der vorhergehenden Ansprüche, **dadurch gekennzeichnet,**
**dass** die Benutzerschnittstelleneinheit (100) als ein Anschlussmodul zur Anbindung von Sensoren und/oder Aktoren des Türantriebs (1) an eine Steuereinheit (4) des Türantriebs (1), beispielsweise an eine neben der Benutzerschnittstelleneinheit (100) angeordnete Steuereinheit (4) des Türantriebs (1), ausgebildet ist.

14. Benutzerschnittstelleneinheit (100) nach einem der vorhergehenden Ansprüche, **dadurch gekennzeichnet,**
**dass** die Benutzerschnittstelleneinheit (100) dazu ausgebildet ist, mittels der Bedienelemente (131, 132, 133, 134) Eingabeinformationen zur Konfiguration des Türantriebs (1) zu erfassen.

15. Türantrieb (1) zum automatischen Antreiben einer Tür (20) mit einer mit dem Türantrieb (1) verbundenen Benutzerschnittstelleneinheit (100) gemäß einem der vorhergehenden Ansprüche,
wobei der Türantrieb (1) in einer ersten räumlichen Antriebslage und in einer zweiten räumlichen Antriebslage an der Tür (20) montierbar ist,
wobei die Benutzerschnittstelleneinheit (100) bei Montage des Türantriebs (1) in der ersten Antriebslage in der ersten räumlichen Lage angeordnet ist und bei Montage des Türantriebs (1) in der zweiten Antriebslage in der zweiten räumlichen Lage.

16. Türantrieb (1) gemäß Anspruch 15, **dadurch gekennzeichnet,**
**dass** der Türantrieb (1) dazu ausgebildet ist, in der ersten Antriebslage als ein linkshändiger Türantrieb (1) eine links angeschlagene Tür (20) und in der zweiten Lage als ein rechtshändiger Türantrieb (1) eine rechts angeschlagene Tür (20) anzutreiben.

## Claims

1. User interface unit (100) for an automated door drive (1) having a display unit (110) for outputting output information (120, 121, 122) and an operating element arrangement (130) for capturing input information,
wherein the user interface unit (100) together with the door drive (1) is installable in a first spatial pose and in a second spatial pose at a door (20) that is driveable by the door drive (1), wherein the operating element arrangement (130) comprises a first operating element (131) and a second operating element (132),
wherein the first operating element (131) in the first spatial pose of the user interface unit (100) is arranged on the same spatial side (15) of the operating element arrangement (130) as the second operating element (132) in the second spatial pose,
wherein the display unit (110) is configured to display the displayed output information (120, 121, 122) in the same spatial orientation both in the first spatial pose and also in the second spatial pose of the user interface unit (100), and
wherein the user interface unit (100) is configured to capture the same input information with the first operating element (131) in the first spatial pose as with the second operating element (132) in the second spatial pose.

2. User interface unit (100) according to Claim 1,
**characterized**
**in that** an arrangement of the operating elements (131, 132) of the operating element arrangement (130) is invariant to a transfer of the user interface unit (100) from the first pose into the second pose.

3. User interface unit (100) according to either of the preceding claims, **characterized**
**in that** the operating element arrangement (130) is designed to be point-symmetric, for example point-symmetric with respect to a centre point (135) of the operating element arrangement and/or a centre point (115) of the display unit (110).

4. User interface unit (100) according to any of the preceding claims, **characterized**
**in that** the user interface unit (100) is transferable from the first pose into the second pose by way of a rotation of the user interface unit (100) by 180°.

5. User interface unit (100) according to any of the preceding claims, **characterized**
**in that** the first operating element (131) is arranged on a first side (111) of the display unit (110) and the second operating element (132) is arranged on a second side (112) of the display unit (110), and
**in that** the first side (111) of the display unit (110) with the first operating element (131) in the first spatial pose of the user interface unit (100) is located on the same spatial side (15) of the display unit (110) as the second side (112) of the display unit (110) with the second operating element (132) in the second spatial pose.

6. User interface unit (100) according to Claim 5,
**characterized**
**in that** the first side (111) is arranged opposite the second side (112).

7. User interface unit (100) according to any of the preceding claims, **characterized**
**in that** the first operating element (131) and the second operating element (132) are configured to be non-invariant to a change in pose of the individual operating elements on which the transfer of the user interface unit (100) from the first pose into the second pose is based, for example to a rotation of the individual operating elements by 180°, and
**in that** the first operating element (131) in the first pose of the user interface unit (100) is aligned in the same spatial direction as the second operating element (132) in the second pose.

8. User interface unit (100) according to any of the preceding claims, **characterized**
**in that** the operating element arrangement (130) has further operating elements (133, 134).

9. User interface unit (100) according to any of the preceding claims, **characterized**
**in that** the user interface unit (100) is configured to illuminate in the first pose the first operating element (131) in a first colour and the second operating element (132) in a second colour, and
**in that** the user interface unit (100) is configured to illuminate in the second pose the second operating element (131) in the first colour.

10. User interface unit (100) according to any of the preceding claims, **characterized**
**in that** the user interface unit (100) has a pose sensor for automatically ascertaining the installation pose at the driven door (20).

11. User interface unit (100) according to any of the preceding claims, **characterized**
**in that** the user interface unit (100) is configured to represent in the display unit (110) a selection element for selecting individual information elements of the display information (120, 121, 122), for example menu items of a displayed selection menu, and
wherein the user interface unit (100) is configured to move the selection element in each case in the same spatial direction (10, 11, 12, 13), for example upwards or downwards, when capturing the input information that is captured in the first pose via the first operating element (131) and in the second pose via the second operating element (132).

12. User interface unit (100) according to any of the preceding claims, **characterized**
**in that** the user interface unit (100) has a connection means arrangement (140) for connecting to the door drive (1), and
**in that** the connection means arrangement (140) is designed asymmetrically with respect to a transfer of the user interface unit (100) from the first pose into the second pose.

13. User interface unit (100) according to any of the preceding claims, **characterized**
**in that** the user interface unit (100) is designed as a connection module for connecting sensors and/or actuators of the door drive (1) to a control unit (4) of the door drive (1), for example to a control unit (4) of the door drive (1) that is arranged next to the user interface unit (100).

14. User interface unit (100) according to any of the preceding claims, **characterized**
**in that** the user interface unit (100) is configured to capture by means of the operating elements (131, 132, 133, 134) input information for configuring the door drive (1).

15. Door drive (1) for automatically driving a door (20) with a user interface unit (100) connected to the door drive (1) according to any of the preceding claims,
wherein the door drive (1) is installable at the door (20) in a first spatial drive pose and in a second spatial drive pose,
wherein the user interface unit (100) is arranged in the first spatial pose when the door drive (1) is installed in the first drive pose and in the second spatial pose when the door drive (1) is installed in the second drive pose.

16. Door drive (1) according to Claim 15, **characterized in that** the door drive (1) is configured to drive in the first drive pose as a left-handed door drive (1) a door (20) hinged on the left and in the second pose as a right-handed door drive (1) a door (20) hinged on the right.

## Revendications

1. Unité d'interface utilisateur (100) pour un dispositif d'entraînement de porte automatique (1), comprenant une unité d'affichage (110) pour sortir des informations de sortie (120, 121, 122) et un agencement d'éléments d'utilisation (130) pour détecter des informations d'entrée,
dans laquelle, conjointement avec le dispositif d'entraînement de porte (1), l'unité d'interface utilisateur (100) peut être montée dans une première position spatiale et dans une deuxième position spatiale sur une porte (20) pouvant être entraînée par le dispositif d'entraînement de porte (1),
dans laquelle l'agencement d'éléments d'utilisation (130) comprend un premier élément d'utilisation (131) et un deuxième élément d'utilisation (132),
dans laquelle, dans la première position spatiale de l'unité d'interface utilisateur (100), le premier élément d'utilisation (131) est disposé du même côté spatial (15) de l'agencement d'éléments d'utilisation (130) que le deuxième élément d'utilisation (132) dans la deuxième position spatiale,
dans laquelle l'unité d'affichage (110) est réalisée pour afficher les informations de sortie (120, 121, 122) affichées à la fois dans la première position spatiale et dans la deuxième position spatiale de l'unité d'interface utilisateur (100) dans la même orientation spatiale, et
dans laquelle l'unité d'interface utilisateur (100) est réalisée pour détecter dans la première position spatiale par le premier élément d'utilisation (131) la même information d'entrée que par le deuxième élément d'utilisation (132) dans la deuxième position spatiale.

2. Unité d'interface utilisateur (100) selon la revendication 1, **caractérisée en ce qu'**une disposition des éléments d'utilisation (131, 132) de l'agencement d'éléments d'utilisation (130) est invariante par rapport à un passage de l'unité d'interface utilisateur (100) de la première position à la deuxième position.

3. Unité d'interface utilisateur (100) selon l'une quelconque des revendications précédentes, **caractérisée en ce que** l'agencement d'éléments d'utilisation (130) est réalisé à symétrie ponctuelle, par exemple à symétrie ponctuelle par rapport à un centre (135) de l'agencement d'éléments d'utilisation et/ou à un centre (115) de l'unité d'affichage (110).

4. Unité d'interface utilisateur (100) selon l'une quelconque des revendications précédentes, **caractérisée en ce que** l'unité d'interface utilisateur (100) peut être amenée à passer de la première position à la deuxième position par une rotation sur 180° de l'unité d'interface utilisateur (100).

5. Unité d'interface utilisateur (100) selon l'une quelconque des revendications précédentes, **caractérisée**
**en ce que** le premier élément d'utilisation (131) est disposé sur un premier côté (111) de l'unité d'affichage (110), et le deuxième élément d'utilisation (132) est disposé sur un deuxième côté (112) de l'unité d'affichage (110), et
**en ce que** le premier côté (111) de l'unité d'affichage (110) avec le premier élément d'utilisation (131) dans la première position spatiale de l'unité d'interface utilisateur (100) se trouve du même côté spatial (15) de l'unité d'affichage (110) que le deuxième côté (112) de l'unité d'affichage (110) avec le deuxième élément d'utilisation (132) dans la deuxième position spatiale.

6. Unité d'interface utilisateur (100) selon la revendication 5, **caractérisée en ce que** le premier côté (111) est disposé à l'opposé du deuxième côté (112).

7. Unité d'interface utilisateur (100) selon l'une quelconque des revendications précédentes, **caractérisée**
**en ce que** le premier élément d'utilisation (131) et le deuxième élément d'utilisation (132) ne sont réalisés de manière invariante par rapport à un changement de position des éléments d'utilisation individuels à l'origine du passage de l'unité d'interface utilisateur (100) de la première position à la deuxième position, par exemple par rapport à une rotation sur 180° des éléments d'utilisation individuels, et
**en ce que** le premier élément d'utilisation (131) dans la première position de l'unité d'interface utilisateur (100) est aligné le long de la même direction spatiale que le deuxième élément d'utilisation (132) dans la deuxième position.

8. Unité d'interface utilisateur (100) selon l'une quelconque des revendications précédentes, **caractérisée en ce que** l'agencement d'éléments d'utilisation (130) présente des éléments d'utilisation supplémentaires (133, 134).

9. Unité d'interface utilisateur (100) selon l'une quelconque des revendications précédentes, **caractérisée**
**en ce que** l'unité d'interface utilisateur (100) est réalisée pour éclairer dans la première position le premier élément d'utilisation (131) dans une première couleur et le deuxième élément d'utilisation (132) dans une deuxième couleur, et
**en ce que** l'unité d'interface utilisateur (100) est réalisée pour éclairer dans la deuxième position le deuxième élément d'utilisation (131) dans la première couleur.

10. Unité d'interface utilisateur (100) selon l'une quelconque des revendications précédentes, **caractérisée en ce que** l'unité d'interface utilisateur (100) présente un capteur de position pour la détermination automatique de la position d'installation sur la porte entraînée (20).

11. Unité d'interface utilisateur (100) selon l'une quelconque des revendications précédentes, **caractérisée en ce que** l'unité d'interface utilisateur (100) est réalisée pour représenter sur l'unité d'affichage (110) un élément de sélection pour sélectionner différents éléments d'information parmi les informations d'affichage (120, 121, 122), par exemple des éléments de menu d'un menu de sélection affiché, et
dans laquelle l'unité d'interface utilisateur (100) est réalisée, lors de la détection de l'information d'entrée détectée dans la première position par le premier élément d'utilisation (131) et dans la deuxième position par le deuxième élément d'utilisation (132), pour déplacer l'élément de sélection respectivement dans la même direction spatiale (10, 11, 12, 13), par exemple vers le haut ou vers le bas.

12. Unité d'interface utilisateur (100) selon l'une quelconque des revendications précédentes, **caractérisée**
**en ce que** l'unité d'interface utilisateur (100) présente un agencement de moyens de liaison (140) pour une liaison avec le dispositif d'entraînement de porte (1), et
**en ce que** l'agencement de moyens de liaison (140) est réalisé de manière asymétrique par rapport à un passage de l'unité d'interface utilisateur (100) de la première position à la deuxième position.

13. Unité d'interface utilisateur (100) selon l'une quelconque des revendications précédentes, **caractérisée en ce que** l'unité d'interface utilisateur (100) est réalisée comme un module de raccordement pour l'intégration de capteurs et/ou d'actionneurs du dispositif d'entraînement de porte (1) dans une unité de commande (4) du dispositif d'entraînement de porte (1), par exemple dans une unité de commande (4) du dispositif d'entraînement de porte (1), disposée à côté de l'unité d'interface utilisateur (100).

14. Unité d'interface utilisateur (100) selon l'une quelconque des revendications précédentes, **caractérisée en ce que** l'unité d'interface utilisateur (100) est réalisée pour détecter au moyen des éléments d'utilisation (131, 132, 133, 134) des informations d'entrée pour la configuration du dispositif d'entraînement de porte (1).

15. Dispositif d'entraînement de porte (1) pour un entraînement automatique d'une porte (20) par une unité d'interface utilisateur (100) selon l'une quelconque des revendications précédentes, reliée au dispositif d'entraînement de porte (1),
dans lequel le dispositif d'entraînement de porte (1) peut être monté sur la porte (20) dans une première position d'entraînement spatiale et dans une deuxième position d'entraînement spatiale,
dans lequel l'unité d'interface utilisateur (100) est disposée dans la première position spatiale si le dispositif d'entraînement de porte (1) est monté dans la première position d'entraînement, et est disposée dans la deuxième position spatiale si le dispositif d'entraînement de porte (1) est monté dans la deuxième position d'entraînement.

16. Dispositif d'entraînement de porte (1) selon la revendication 15, **caractérisé en ce que** le dispositif d'entraînement de porte (1) est réalisé dans la première position d'entraînement comme un dispositif d'entraînement de porte à gauche (1) pour entraîner une porte (20) fermant à gauche et dans la deuxième position comme un dispositif d'entraînement de porte à droite (1) pour entraîner une porte (20) fermant à droite.
